# DEMANDE DE BREVET EUROPEEN

(11) **EP 1 278 392 A1**
(43) Date de publication de la demande: **22.01.2003**
(21) Numéro de dépôt: 02291616.7
(22) Date de dépôt: 28.06.2002
(51) Int. Cl.: H04Q 11/04

(54) **Procédé de communication de flux ATM, et relais pour la mise en oeuvre du procédé**

(30) Priorité: 16.07.2001 FR 0109465
(71) Demandeur: Nortel Networks Limited, St. Laurent, Quebec H4S 2A9 (CA)
(72) Inventeur: Lagrange, Patrick, 92120 Montrouge (FR); Calmel, Pierre-Emmanuel, 78000 Versaukkes (FR); Fontanes, Valérie, 92150 Suresnes (FR)
(74) Mandataire: Loisel, Bertrand

(57) **Abrégé**

On utilise une liaison à multiplexage temporel avec des trames successives ayant chacune un nombre déterminé d'intervalles de temps de transmission. Une première unité (6) insère des cellules ATM dans une partie des intervalles de temps allouée à un flux ATM destiné à une seconde unité (3), et d'autres données dans d'autres intervalles de temps alloués au transport d'au moins un flux non ATM destiné à une troisième unité (2). On analyse les signaux reçus pour rechercher une synchronisation avec les cellules du flux ATM et identifier la partie des intervalles de temps allouée au flux ATM. Cette analyse comporte un test de synchronisation exécuté successivement sur des sous-ensembles d'intervalles de temps au sein des trames jusqu'à observer une bonne synchronisation. Les cellules extraites des intervalles de temps de la partie identifiée sont alors dirigées vers la seconde unité, tandis que les autres données sont dirigées vers la troisième unité.

## Description

La présente invention concerne les transmissions de flux hétérogènes sur des liaisons à multiplexage temporel. Elle s'applique notamment à la transmission d'un flux ATM accompagné d'un ou plusieurs autres flux de données par l'intermédiaire d'interfaces de transmission de la hiérarchie plésiochrone de type DS1 ou E1.

Les liaisons DS1 ou E1 regroupent des canaux élémentaires (DS0) à 64 kbit/s par un principe d'accès par multiplexage temporel (TDM, « Time Division Multiplex »). Selon ce principe, le temps de transmission sur la liaison est divisé en trames de 125 µs, elles-mêmes subdivisées en K intervalles de temps (IT) affectés chacun à la transmission d'un octet de données d'un canal DS0 respectif. En Amérique du Nord (liaisons DS1), le nombre K vaut 24, de sorte que le débit global de la liaison est de 1,544 Mbit/s. En Europe, les liaisons sont de type E1 à 2,048 Mbit/s avec K = 32 (en fait, seuls 30 de 32 intervalles de temps sont utilisables pour transférer du trafic utile).

Une liaison TDM peut être utilisée pour transporter du trafic ATM (« Asynchronous Transfer Mode »). Dans la transmission ATM, les données sont découpées en paquets de 53 octets appelés cellules. Chaque cellule comporte un en-tête de 5 octets et 48 octets de données. Le cinquième octet de l'en-tête contient un code de vérification redondant (CRC, « Cyclic Redundancy Check ») destiné à augmenter la fiabilité de la transmission des informations de l'en-tête. La présence de cet octet de CRC permet en outre, de façon connue, de détecter les limites des cellules dans le signal numérique qui les porte.

La manière d'insérer des cellules ATM sur une liaison TDM est spécifiée dans la recommandation AF-PHY-0130.00, « ATM on Fractional E1/T1 », publiée en octobre 1999 par le Comité Technique de l'ATM Forum. Cette insertion présente les caractéristiques suivantes :
- l'alignement des octets des cellules ATM respecte l'alignement des octets sur la liaison E1 ou DS1, c'est-à-dire qu'on trouve directement les octets des cellules ATM dans les IT de la trame ;
- les IT portant les octets des cellules ATM peuvent être ou ne pas être consécutifs sur la liaison E1 ou DS1 ;
- l'alignement des cellules est indépendant de l'alignement des trames à K × 64 kbit/s répétées toutes les 125 µs.

La présente invention envisage notamment des scénarios de déploiement de réseau, dans lesquels on vient faire passer des circuits virtuels ATM sur des liaisons TDM existantes portant du trafic d'une autre nature. Un tel scénario se rencontre lors de la migration d'infrastructures existantes vers des réseaux utilisant la technologie ATM.

En particulier, les réseaux radio cellulaires de troisième génération de type UMTS (« Universal Mobile Telecommunication System ») utilisent des connexions ATM pour transférer les données depuis et vers les stations de base déployées sur le territoire de couverture. Ces réseaux de troisième génération se mettent en place à partir de l'infrastructure existante de réseaux de seconde génération de type GSM (« Global System for Mobile communication ») ou analogue, qui utilisent des liaisons TDM avec les stations de base. Lors de la mise en place du service de troisième génération, ces liaisons TDM peuvent être utilisées aussi pour transporter les flux ATM destinés aux nouvelles stations de base.

Dans un tel scénario, des dispositions doivent être prises pour séparer le flux de cellules ATM des autres flux portés par la liaison TDM. En général, cela requiert une configuration des différents équipements mis en jeu, afin qu'ils connaissent les intervalles de temps de la trame TDM desquels ils devront extraire les informations pertinentes. Ainsi, la mise en place de l'équipement destinataire du flux ATM nécessite une configuration spécifique de son interface TDM afin qu'il puisse recevoir et se synchroniser sur les cellules ATM.

Il peut être souhaitable de se dispenser de ces opérations de configuration (concept « plug & play »). Cela présente un intérêt particulier dans l'exemple précité du déploiement d'un nouveau réseau de radiocommunication cellulaire, dans lequel un assez grand nombre de nouvelles stations de base doivent être installées à des emplacements variés.

Un but de la présente invention est de répondre au besoin ci-dessus.

L'invention propose ainsi un procédé de communication selon une liaison à multiplexage temporel sur laquelle des signaux numériques sont échangés sous forme de trames successives ayant chacune un nombre déterminé d'intervalles de temps de transmission. Une première unité insère des cellules ATM dans une partie des intervalles de temps allouée à un flux ATM destiné à une seconde unité, et d'autres données dans d'autres intervalles de temps alloués au transport d'au moins un flux non ATM destiné à une troisième unité. Dans ce procédé, on analyse les signaux numériques reçus dans des trames successives pour rechercher une synchronisation avec les cellules du flux ATM et identifier la partie des intervalles de temps allouée au flux ATM. Cette analyse comporte un test de synchronisation exécuté successivement sur des sous-ensembles d'intervalles de temps au sein des trames jusqu'à ce que le test indique une bonne synchronisation, le sous-ensemble sur lequel le test indique une bonne synchronisation étant identifié comme constituant ladite partie allouée au flux ATM. Les cellules ATM extraites des intervalles de temps de la partie identifiée sont dirigées vers la seconde unité, tandis que les données des intervalles de temps situés en dehors de la partie identifiée sont dirigées vers la troisième unité.

La détection automatique des IT portant le flux ATM intervient en même temps que la synchronisation sur les cellules ATM du flux, et elle permet de se dispenser de l'opération de configuration de l'équipement qui effectue l'analyse. Il suffit alors d'allouer les intervalles de temps au niveau de la première unité transmettant les flux.

Afin de minimiser le temps moyen de détection, il est avantageux d'exécuter successivement le test de synchronisation sur des sous-ensembles composés d'un nombre décroissant d'intervalles de temps au sein de la trame. Pour chaque nombre d'intervalle de temps, on peut exécuter successivement le test sur tous les sous-ensembles d'une catégorie de sous-ensembles composés de ce nombre d'intervalles de temps.

Tester a priori toutes les combinaisons possibles d'intervalles de temps pourrait conduire à des temps de détection assez longs. Pour éviter cela, on peut n'exécuter le test de synchronisation que sur des sous-ensembles composés d'intervalles de temps consécutifs au sein de la trame, ou sur des sous-ensembles composés d'un ou deux blocs, chaque bloc étant lui-même composé d'intervalles de temps consécutifs au sein de la trame. La première unité doit alors adopter une stratégie d'allocation correspondante afin que les cellules ATM puissent être reçues.

Un autre aspect de la présente invention se rapporte à un relais de signaux numériques reçus d'une unité distante selon une liaison à multiplexage temporel et organisés sous forme de trames successives ayant chacune un nombre déterminé d'intervalles de temps de transmission, une partie des intervalles de temps étant allouée à un flux ATM destiné à une seconde unité tandis que d'autres intervalles de temps sont alloués au transport d'au moins un flux non ATM destiné à une troisième unité. Le relais comprend des moyens d'analyse des signaux numériques reçus dans des trames successives pour rechercher une synchronisation avec des cellules du flux ATM et identifier la partie des intervalles de temps allouée au flux ATM, et des moyens de routage pour diriger vers la seconde unité les cellules ATM extraites des intervalles de temps de la partie identifiée et pour diriger vers la troisième unité les données des intervalles de temps situés en dehors de la partie identifiée. Les moyens d'analyse comprennent des moyens pour exécuter successivement un test de synchronisation sur des sous-ensembles d'intervalles de temps au sein des trames jusqu'à ce que le test indique une bonne synchronisation, le sous-ensemble sur lequel le test indique une bonne synchronisation étant identifié comme constituant ladite partie allouée au flux ATM.

D'autres particularités et avantages de la présente invention apparaîtront dans la description ci-après d'exemples de réalisation non limitatifs, en référence aux dessins annexés, dans lesquels :
- la figure 1 est un schéma synoptique d'un réseau d'accès radio mettant en oeuvre la présente invention ;
- la figure 2 est un diagramme illustrant des exemples de signaux numériques transmis sur une liaison TDM et de flux ATM extraits de ces signaux ;
- la figure 3 est un organigramme d'une analyse effectuée dans un mode de réalisation de l'invention ; et
- les figures 4 et 5 sont un diagramme et un organigramme semblables à ceux des figures 2 et 3 dans un autre mode de réalisation de l'invention.

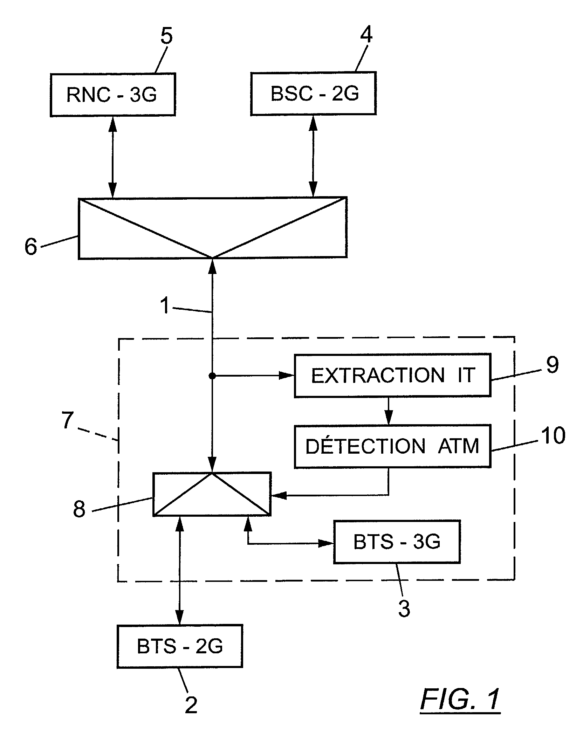

La figure 1 montre une ligne de transmission 1 portant des liaisons TDM pour transférer des données entre des stations de base de radiocommunication 2, 3 et des contrôleurs de stations de base 4, 5.

La station de base 2 (BTS, « Base Transceiver Station ») appartient à un réseau cellulaire de seconde génération de type GSM. Il lui correspond un contrôleur de stations de base 4 (BSC, « Base Station Controller ») avec lequel elle échange des informations sur des canaux DS0 à 64 kbit/s, certains d'entre eux étant partagés en 4 sous-canaux à 16 kbit/s. Dans chaque sens de communication, ces canaux DS0 sont multiplexés dans le temps sur une liaison TDM de la ligne 1.

La BTS 3 appartient à un réseau cellulaire de troisième génération de type UMTS. Il lui correspond un contrôleur de réseaux radio 5 (RNC, « Radio Network Controller"), avec lequel elle échange des données sous forme de cellules ATM. Ces cellules ATM sont portées par la même liaison TDM, sur laquelle elles occupent un certain nombre d'intervalles de temps.

Dans le sens descendant, des contrôleurs 4, 5 vers les BTS 2, 3, les cellules ATM sont intégrées aux signaux TDM par une unité de multiplexage 6. Cette unité 6 transpose les flux DS0 reçus du BSC 4 sur des flux DS0 respectifs de la liaison TDM descendante formée sur la ligne 1. Elle alloue d'autre part un certain nombre d'autres intervalles de temps au flux ATM issu du RNC 5. Elle transpose les octets des cellules ATM sur ces intervalles de temps de la manière décrite dans la recommandation AF-PHY-0130.00 précitée.

La liaison TDM issue de l'unité de multiplexage 6 est reliée à un équipement distant 7 qui, dans l'exemple considéré sur la figure 1, incorpore la BTS 3 de troisième génération. Cet équipement 7 comporte en outre une interface TDM qui sert de relais entre la ligne 1 d'une part et les BTS 2 et 3 d'autre part.

Cette interface TDM comporte une unité de démultiplexage 8 qui transfère à la BTS 2 les canaux DS0 qui lui sont destinés. Ce transfert est effectué sur une autre liaison TDM de même type, sans modifier la position des IT. L'unité de démultiplexage 8 récupère d'autre part les cellules ATM dans les autres canaux DS0 pour les fournir à la BTS 3.

Dans le sens montant, l'unité 8 sert à multiplexer les flux de données issus des BTS 2 et 3. Elle transpose les canaux DS0 reçus de la BTS 2 sur des canaux correspondants d'une autre liaison TDM prévue en sens inverse sur la ligne 1. Elle assure d'autre part l'insertion des cellules ATM issues de la BTS 3 dans des intervalles de temps des trames TDM sur cette liaison montante. Les opérations correspondantes de démultiplexage sont assurées par l'unité 6 qui distribue les signaux entre le BSC 4 et le RNC 5.

L'allocation de certains des canaux DS0 au transport des cellules ATM est définie par configuration de la ligne au niveau de l'unité 6. Aucune opération de configuration correspondante n'est réalisée au niveau de l'unité 8. Celle-ci est associée à des modules 9, 10 d'analyse des signaux numériques reçus sur la liaison TDM descendante afin de détecter quelle est l'allocation définie au niveau de l'unité 6. Cette allocation est indiquée à l'unité de démultiplexage 8 pour lui permettre d'extraire les cellules ATM à fournir à la BTS 3. Dans le sens inverse, l'unité 8 adopte la même allocation de canaux DS0, qui est donc connue de l'unité 6 pour le démultiplexage.

Les modules d'analyse 9, 10 effectuent simultanément l'identification des IT du multiplex qui sont alloués au transport ATM et la synchronisation sur les cellules ATM transportées.

L'identification des IT portant les cellules ATM est typiquement réalisée lors de la mise en place de l'équipement 7 qui incorpore la BTS de troisième génération. Dans un scénario de déploiement typique, la ligne TDM 1 préexiste entre les équipements de deuxième génération 2, 4 pour transporter le trafic GSM. Les équipements 5, 6, 7 sont ajoutés au cours du déploiement du réseau de troisième génération.

Avant que les premières cellules ATM soient détectées, l'unité 8 transfère de façon transparente l'ensemble des signaux E1 ou DS1 entre l'unité 6 et la BTS 2. Lorsque les cellules ATM commencent à circuler, les modules 9, 10 cherchent à effectuer la synchronisation. Tant que cette synchronisation n'est pas réalisée, l'ensemble des signaux DS1 ou E1 continue à être transféré vers la BTS 2. Une fois que cette synchronisation est obtenue, l'unité 8 est commandée en conséquence pour diriger les cellules ATM de la manière précédemment indiquée.

Cette méthode permet une mise en place « plug & play » de l'équipement de troisième génération 7 incorporant la BTS 3.

La synchronisation ATM est recherchée par le module 10 sur des trains d'octets extraits des intervalles de temps TDM par le module 9. Ce module 9 essaie successivement des sous-ensembles d'intervalles de temps au sein des trames TDM, et fournit les trains d'octets ainsi extraits au module de détection de synchronisation 10.

La détection de synchronisation par le module 10 est effectuée de façon classique en cherchant à localiser les octets de CRC des en-têtes ATM.

L'octet situé en cinquième position dans l'en-tête d'une cellule ATM est le reste de la division dans le corps de Galois d'ordre 2 du polynôme P(X) = X¹⁶.(a₀.X⁰ + a₁.X¹ + ... + a₃₁.X³¹), où les aᵢ (0 ≤ i < 32) sont les bits des quatre premiers octets de l'en-tête, par le polynôme générateur G(X) = X⁸ + X² + X + 1. Cette détection des limites de cellule est spécifiée dans la section 7 de la recommandation 1.432.1 « B-ISDN User-Network Interface - Physical Layer Specification: General Characteristics ». Le test de synchronisation utilise un automate de détection à trois états PRESYNC, SYNCH et HUNT:
- à l'état HUNT, la détection d'un octet de CRC correct fait passer l'automate à l'état PRESYNC ;
- à l'état PRESYNC, la détection d'un octet de CRC incorrect à l'emplacement attendu fait repasser l'automate à l'état HUNT ;
- à l'état PRESYNC, la détection de δ octets de CRC corrects consécutifs aux emplacements attendus fait l'automate passer à l'état SYNC ;
- à l'état SYNCH, la détection de α octets de CRC incorrects consécutifs fait l'automate passer à l'état HUNT.

La synchronisation est obtenue quand l'automate est à l'état SYNCH. A titre d'exemple, on peut prendre α = 7 et δ = 8, ce qui assure une détection très fiable sur une portion du flux extraite sur une durée maximum correspondant à 12 cellules ATM.

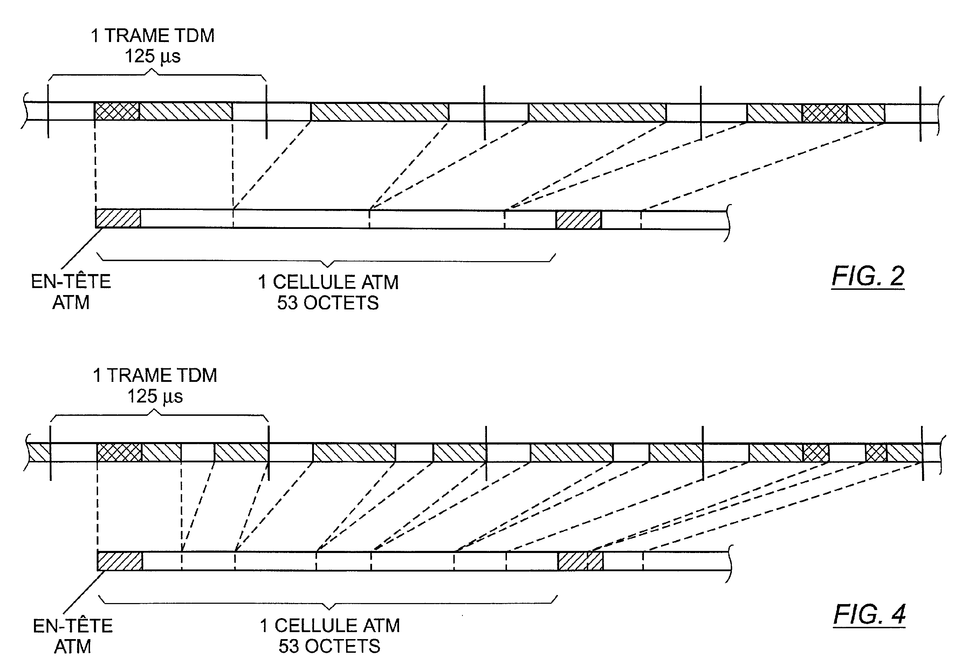

Pour limiter le nombre de sous-ensembles à essayer par le module d'extraction 9, on peut adopter au niveau de l'unité 6 une stratégie d'allocation telle que la partie de la trame allouée au flux ATM descendant soit composée d'intervalles de temps consécutifs, comme représenté par les portions hachurées sur le diagramme supérieur de la figure 2. Dans ce cas, le module 9 peut ne tester que des sous-ensembles composés d'intervalles de temps consécutifs au sein de la trame TDM.

Les paramètres inconnus a priori sont alors le nombre N d'IT consécutifs de la trame alloués au flux ATM, et la position p du premier de ces IT dans la trame. Si L désigne le nombre total d'IT susceptible d'être alloués à du trafic d'utilisateur sur la liaison TDM (L = 24 pour une liaison DS1, et L= 30 pour une liaison E1), alors on a Nmin ≤ N ≤ L et 0 ≤ p ≤ L-N, où Nmin est un nombre minimal d'IT qui peut être égal à 1.

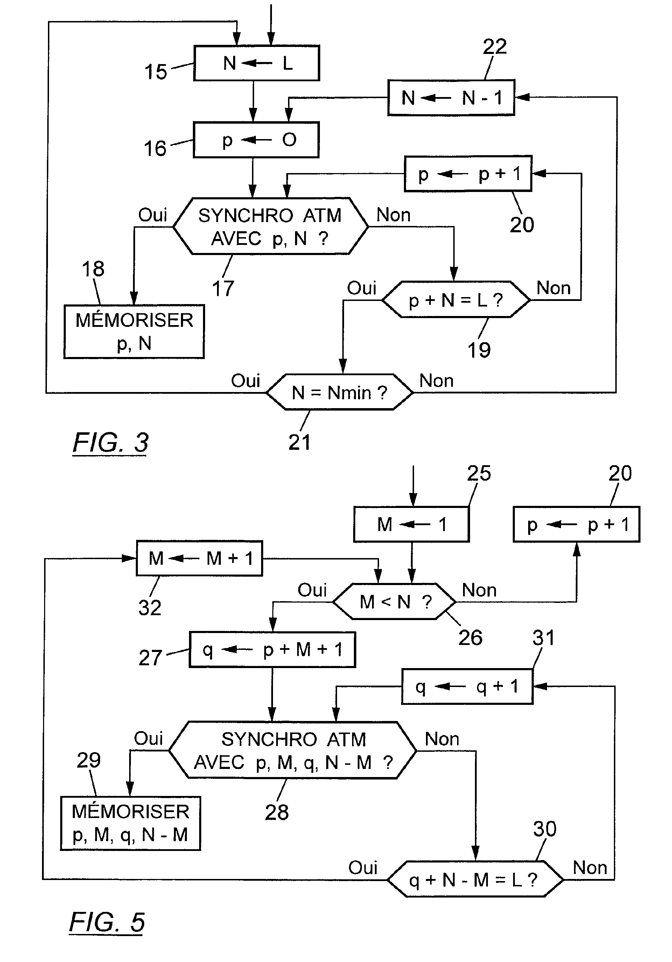

Le test de synchronisation est avantageusement exécuté sur des sous-ensembles composés d'un nombre décroissant N d'intervalles de temps dans la trame. Dans le cas précédent (allocation d'IT en un bloc dans la trame), la procédure d'analyse appliquée par les modules 9, 10 peut être conforme à l'organigramme de la figure 3.

L'analyse est initialisée à l'étape 15 en prenant N = L. Pour chaque valeur de N, la première position p = 0 est d'abord sélectionnée à l'étape 16. Les N octets consécutifs de chaque trame TDM à partir de la position p sont fournis par le module 9 au module de détection 10 sur une durée maximum correspondant à 12 cellules ATM (soit 79,5/N ms).

Si l'automate de détection du module 10 détecte la synchronisation ATM dans ces signaux (étape 17), les valeurs des nombres p et N sont mémorisées à l'étape 18 et fournies à l'unité 8 pour qu'elle opère en conséquence le démultiplexage et le multiplexage des données. En l'absence de synchronisation au bout de la durée maximum de 79,5/N ms, le module 9 détermine à l'étape 19 si toutes les positions p ont été testées pour la longueur N, c'est-à-dire si p+N = L. S'il reste des positions à tester (p+N < L), l'index p est incrémenté à l'étape 20, et une nouvelle recherche de synchronisation ATM est effectuée par le module 10 à l'étape 17.

Quand p+n = L lors du test 19, le module 9 détermine à l'étape 21 si le nombre minimal d'IT Nmin est atteint. Si N > Nmin, la longueur N est décrémentée d'une unité à l'étape 22 avant de revenir à l'étape 16. Sinon, la recherche complète de la synchronisation ATM a échoué (peut-être parce que le transfert des cellules ATM sur la ligne 1 n'a pas encore commencé), de sorte que le module 9 revient à l'étape initiale 15.

Dans la variante de réalisation illustrée sur la figure 4, on admet un plus grand nombre de schémas d'allocation des IT au flux ATM. Les IT ainsi alloués au sein d'une trame TDM sont regroupés soit en un bloc composé d'intervalles de temps consécutifs (comme sur la figure 2), soit en deux blocs séparés composés chacun d'intervalles de temps consécutifs (comme sur la figure 4). Ceci donne plus de souplesse de configuration, au prix d'une augmentation du nombre de sous-ensembles devant être testés par le module d'extraction 9. La procédure de la figure 3 peut alors être complétée par les étapes représentées sur la figure 5, exécutées après le test 19 lorsque p+N < L.

Dans cette procédure modifiée, N désigne toujours le nombre total d'IT de la trame TDM qui sont alloués au flux ATM. L'algorithme procède encore en faisant décroître progressivement le nombre N (boucle externe de la figure 3) et en testant les différentes combinaisons possibles pour chaque valeur de N. L'index p désigne encore la position dans la trame du premier IT alloué au flux TDM. Le nombre M désigne la taille du premier bloc en nombre d'octets lorsque l'allocation au flux TDM est en deux blocs séparés. Le deuxième bloc, de taille N-M, est positionné par un index q.

Quand p+N < L au test 19 de la figure 3, la taille M du premier bloc est initialisée à 1 à l'étape 25 de la figure 5. Les nombres M et N sont ensuite comparés à l'étape 26, et si M = N l'algorithme revient à l'étape 20 précédemment décrite où l'index p est incrémenté d'une unité. Si M < N au test 26, une boucle de recherche est initialisée à l'étape 27 en plaçant le second bloc sur la position q = p+M+1. Dans chaque itération de cette boucle, le signal extrait par le module 9 sur une durée maximum de 12 cellules ATM avec les paramètres p, M, q, N-M est fourni au module 10 de recherche de synchronisation.

Si la synchronisation réussit (test 28), ces paramètres p, M, q, N-M sont mémorisés à l'étape 29 et appliqués pour commander l'unité 8. Quand la synchronisation échoue au bout de la durée de 12 cellules, le module 9 détermine à l'étape 30 si la dernière position du second bloc a été testée, c'est-à-dire si q+N-M = L. Si q+N-M < L, l'index q est incrémenté d'une unité à l'étape 31 avant de procéder à la prochaine recherche de synchronisation 28. Quand toutes les positions du second bloc de taille N-M ont été testées (q+N-M = L à l'étape 30), la taille M du premier bloc est incrémentée d'une unité à l'étape 32 avant d'être comparée de nouveau au nombre N à l'étape 26.

Le processus de recherche précédemment décrit permet de localiser les cellules ATM avec une probabilité nulle de fausse sélection. En effet, étant donné que le nombre d'octets d'une cellule ATM (53) est un nombre premier supérieur au nombre maximal L d'IT par trame TDM, les nombres N et 53 sont nécessairement premiers entre eux, de sorte que la détection d'une synchronisation avec la valeur N assure que la synchronisation n'est pas effectuée en détectant une sous-périodicité des cellules dans le flux ATM.

Dans le cas d'une liaison de type E1 (L = 30), le processus décrit en référence à la figure 5 donne lieu à des temps de détection tels qu'indiqués au Tableau I. On voit que ces temps de détections sont compatibles avec une insertion « plug & play » des équipements de troisième génération.

**TABLEAU I**

| N | Temps de détection |
|---|---|
| 30 | 2,65 ms |
| 25 | 114 ms |
| 20 | 481 ms |
| 15 | 1,356 s |
| 10 | 3,505 s |
| 5 | 10,74 s |
| 1 | 71,55 s |

## Revendications

1. Procédé de communication selon une liaison à multiplexage temporel sur laquelle des signaux numériques sont échangés sous forme de trames successives ayant chacune un nombre déterminé d'intervalles de temps de transmission, dans lequel une première unité (6) insère des cellules ATM dans une partie des intervalles de temps allouée à un flux ATM destiné à une seconde unité (3), et d'autres données dans d'autres intervalles de temps alloués au transport d'au moins un flux non ATM destiné à une troisième unité (2), dans lequel on analyse les signaux numériques reçus dans des trames successives pour rechercher une synchronisation avec les cellules du flux ATM et identifier la partie des intervalles de temps allouée au flux ATM, l'analyse comportant un test de synchronisation exécuté successivement sur des sous-ensembles d'intervalles de temps au sein des trames jusqu'à ce que le test indique une bonne synchronisation, le sous-ensemble sur lequel le test indique une bonne synchronisation étant identifié comme constituant ladite partie allouée au flux ATM, et dans lequel on dirige vers la seconde unité les cellules ATM extraites des intervalles de temps de la partie identifiée et on dirige vers la troisième unité les données des intervalles de temps situés en dehors de la partie identifiée.

2. Procédé selon la revendication 1, dans lequel l'analyse des signaux numériques est effectuée dans un équipement (7) incorporant la seconde unité (3).

3. Procédé selon la revendication 1 ou 2, dans lequel, avant que la partie des intervalles de temps allouée au flux ATM ait été identifiée, on dirige l'ensemble des trames vers la troisième unité (2).

4. Procédé selon l'une quelconque des revendications précédentes, dans lequel les données reçues dans chaque intervalle de temps de la trame situé en dehors de la partie allouée au flux ATM sont dirigées vers la troisième unité (2) selon une autre liaison à multiplexage temporel ayant une structure de trame identique, et sont placées dans un intervalle de temps correspondant de la trame sur ladite autre liaison à multiplexage temporel.

5. Procédé selon l'une quelconque des revendications précédentes, dans lequel une autre liaison à multiplexage temporel ayant une structure de trame identique est prévue pour la transmission de flux en sens inverse vers la première unité (6), et dans lequel on transmet sur ladite autre liaison un autre flux ATM placé dans des intervalles de temps correspondant à ceux de ladite partie allouée au flux ATM.

6. Procédé selon l'une quelconque des revendications précédentes, dans lequel le test de synchronisation est exécuté successivement sur des sous-ensembles composés d'un nombre décroissant d'intervalles de temps au sein de la trame.

7. Procédé selon la revendication 6, dans lequel, pour chaque nombre d'intervalles de temps, on exécute successivement le test de synchronisation sur tous les sous-ensembles d'une catégorie de sous-ensembles composés dudit nombre d'intervalles de temps.

8. Procédé selon l'une quelconque des revendications précédentes, dans lequel le test de synchronisation est exécuté sur des sous-ensembles composés d'intervalles de temps consécutifs au sein de la trame.

9. Procédé selon l'une quelconque des revendications 1 à 7, dans lequel le test de synchronisation est exécuté sur des sous-ensembles composés d'un ou deux blocs, chaque bloc étant composé d'intervalles de temps consécutifs au sein de la trame.

10. Relais de signaux numériques reçus d'une unité distante (6) selon une liaison à multiplexage temporel et organisés sous forme de trames successives ayant chacune un nombre déterminé d'intervalles de temps de transmission, une partie des intervalles de temps étant allouée à un flux ATM destiné à une seconde unité (3) tandis que d'autres intervalles de temps sont alloués au transport d'au moins un flux non ATM destiné à une troisième unité (2), le relais comprenant des moyens (9, 10) d'analyse des signaux numériques reçus dans des trames successives pour rechercher une synchronisation avec des cellules du flux ATM et identifier la partie des intervalles de temps allouée au flux ATM, et des moyens de routage (8) pour diriger vers la seconde unité les cellules ATM extraites des intervalles de temps de la partie identifiée et pour diriger vers la troisième unité les données des intervalles de temps situés en dehors de la partie identifiée, dans lequel les moyens d'analyse comprennent des moyens (9, 10) pour exécuter successivement un test de synchronisation sur des sous-ensembles d'intervalles de temps au sein des trames jusqu'à ce que le test indique une bonne synchronisation, le sous-ensemble sur lequel le test indique une bonne synchronisation étant identifié comme constituant ladite partie allouée au flux ATM.

11. Relais selon la revendication 10, dans lequel les moyens de routage (8) sont agencés pour diriger l'ensemble des trames vers la troisième unité (2) avant que la partie des intervalles de temps allouée au flux ATM ait été identifiée par les moyens d'analyse (9, 10).

12. Relais selon la revendication 10 ou 11, dans lequel les moyens de routage (8) sont agencés pour diriger les données reçues dans chaque intervalle de temps de la trame situé en dehors de la partie allouée au flux ATM vers la troisième unité (2) selon une autre liaison à multiplexage temporel ayant une structure de trame identique, en plaçant lesdites données dans un intervalle de temps correspondant de la trame sur ladite autre liaison à multiplexage temporel.

13. Relais selon l'une quelconque des revendications 10 à 12, comprenant des moyens (8) de transmission de flux en sens inverse vers la première unité (6), sur une autre liaison à multiplexage temporel ayant une structure de trame identique, les moyens de transmission étant commandés pour transmettre sur ladite autre liaison un autre flux ATM placé dans des intervalles de temps correspondant à ceux de ladite partie allouée au flux ATM.

14. Relais selon l'une quelconque des revendications 10 à 13, dans lequel les moyens (9, 10) pour exécuter le test de synchronisation sont agencés pour exécuter successivement ledit test sur des sous-ensembles composés d'un nombre décroissant d'intervalles de temps au sein de la trame.

15. Relais selon la revendication 14, dans lequel les moyens (9,10) pour exécuter le test de synchronisation sont agencés pour exécuter successivement ledit test, pour chaque nombre d'intervalles de temps, sur tous les sous-ensembles d'une catégorie de sous-ensembles composés dudit nombre d'intervalles de temps.

16. Relais selon l'une quelconque des revendications 10 à 15, dans lequel les moyens (9, 10) pour exécuter le test de synchronisation sont agencés pour exécuter ledit test sur des sous-ensembles composés d'intervalles de temps consécutifs au sein de la trame.

17. Relais selon l'une quelconque des revendications 10 à 15, dans lequel les moyens (9, 10) pour exécuter le test de synchronisation sont agencés pour exécuter ledit test sur des sous-ensembles composés d'un ou deux blocs, chaque bloc étant composé d'intervalles de temps consécutifs au sein de la trame.
